# EUROPÄISCHE PATENTSCHRIFT

(11) **EP 2 225 012 B1**
(45) Veröffentlichungstag und Bekanntmachung des Hinweises auf die Patenterteilung: **08.08.2012**
(21) Anmeldenummer: 08866632.6
(22) Anmeldetag: 11.11.2008
(51) Int. Cl.: C02F 3/12, B01D 61/16

(54) **ABWASSERBEHANDLUNGSANLAGE UND VERFAHREN ZUM BEHANDELN VON ABWASSER**
WASTEWATER TREATMENT SYSTEM AND METHOD FOR THE TREATMENT OF WASTEWATER
INSTALLATION DE TRAITEMENT D'EAUX USÉES ET PROCÉDÉ DE TRAITEMENT D'EAUX USÉES

(30) Priorität: 21.12.2007 AT 21002007
(43) Veröffentlichungstag der Anmeldung: 08.09.2010
(73) Patentinhaber: VA TECH WABAG GmbH, 1200 Wien (AT); Passavant-Geiger GmbH, 65322 Aarbergen (DE)
(72) Erfinder: KLEGRAF, Ferdinand, 65345 Rauenthal (DE)
(74) Vertreter: KLIMENT & HENHAPEL
(86) Internationale Anmeldenummer: PCT/EP2008/065307
(87) Internationale Veröffentlichungsnummer: WO 2009/083321

(56) Entgegenhaltungen:
- EP-A- 1 568 662
- JP-A- 9 164 398
- US-A1- 2006 131 230

## Beschreibung

Die Erfindung betrifft eine Abwasserbehandlungsanlage, bei der eine Vorrichtung zur mechanischen Reinigung in ein Reaktionsgefäß zur biologischen Reinigung integriert ist, sowie ein Verfahren zur Reinigung von Abwasser.

### Hintergrund der Erfindung

Unter Abwasser ist sowohl durch häuslichen, gewerblichen und industriellen Gebrauch verunreinigtes Wasser als auch Niederschlagswasser aus dem Bereich von Ansiedlungen zu verstehen. Direkte Einleitung von Abwasser in natürliche Gewässer stört deren ökologisches Gleichgewicht und beeinträchtigt ihr Nutzungspotential, beispielsweise hinsichtlich Trinkwassergewinnung. Um diese Störungen und Beeinträchtigungen gering zu halten, ist Abwasser vor der Einleitung zu reinigen.

Mit organischen Stoffen belastetes kommunales und industrielles Abwasser wird vornehmlich in Kläranlagen gereinigt, in denen das Abwasser zuerst mechanisch und dann biologisch behandelt wird.

Zur mechanischen Reinigung wird das Abwasser dabei beispielsweise über Rechenanlagen und Sand/Fettfänge mit geringer Fließgeschwindigkeit in großvolumige Vorklärbecken, auch Absetzbecken genannt, geleitet, in denen eine Vorklärung durch Absetzen und/oder Flotation von Schwebstoffen und/oder chemikalienunterstützt erfolgt. Es kann auch in eigens konstruierten Becken oder Kanälen eine Vorklärbecken ersetzende Abwassersiebung erfolgen. Der aus im Abwasser enthaltenen Schwebstoffen bestehende Primärschlamm, der in den Vorklärbecken oder bei der Abwassersiebung anfällt, wird entnommen, weiterverarbeitet und nach Entwässerung zur Erhöhung seines anfänglich nur bei ca. 2-5 Gew.% liegenden Feststoffanteils schließlich entsorgt, beispielsweise durch Kompostierung, Deponierung oder Verbrennung.

Nach dem Durchlaufen solcher Anlagen zur mechanischen Reinigung tritt das Abwasser in Reaktionsgefäße von Vorrichtungen zur biologischen Reinigung ein.

Beispielsweise ist in EP1568662 eine Kläranlage gezeigt, in der einem Membranbioreaktor-Belebungsbecken eine Filtereinrichtung zur Entfernung von Haaren und gleichartigen Rückständen mittels eines Feinsiebs mit einer Maschenweite von weniger als 1 mm vorgeschaltet ist. Diese dem Membranbioreaktor-Belebungsbecken vorgeschaltete Filtereinrichtung ist in einem eigenen Becken angeordnet, aus dem gefiltertes Abwasser dem Membranbioreaktor-Belebungsbecken zugeführt wird. Gegebenenfalls können zwischen der Filtereinrichtung und dem Membranbioreaktor-Belebungsbecken noch weitere Abwasserbehandlungsstufen wie Sandfang oder Fettabscheider vorgesehen sein.
Das Dokument US20060131230 offenbart eine andere, aus dem Stand der Technik bekannte, Abwasserbehandlungsanlage, bei der eine Vorrichtung zur mechanischen Reinigung in ein Reaktionsgefäß zur biologischen Reinigung integriert ist.

Derartige Kläranlagen haben einen großen Flächen- und Raumbedarf, da die teilweise großvolumigen Vorrichtungen, in denen die einzelnen mechanischen und biologischen Reinigungsschritte durchgeführt werden, nebeneinander angeordnet sind. Zudem bedingt der geringe Feststoffanteil des Primärschlamms, dass er in großen Volumen anfällt und entsprechend ausgedehnte Weiterverarbeitungs- und Entwässerungsvorrichtungen erfordert.

### Aufgabe der Erfindung

Es ist die Aufgabe der vorliegenden Erfindung, eine Abwasserbehandlungsanlage sowie solche Abwasserbehandlungsanlagen umfassende Kläranlagen zur Reinigung von Abwasser bereitzustellen, welche einen gegenüber dem Stand der Technik geringeren Flächen- und Raumbedarf haben.

### Detaillierte Beschreibung der Erfindung

Diese Aufgabe wird gelöst durch eine Abwasserbehandlungsanlage gemäß Anspruch 1.

Das Reaktionsgefäß zur biologischen Reinigung der Abwasserbehandlungsanlage kann beispielsweise ein Becken oder ein Reaktor sein. Es kann ein Reaktionsgefäß zur Durchführung von unbelüfteten Stufen oder belüfteten Stufen eines Belebtschlammverfahrens sein. Weiters kann es Teil einer Vorrichtung zur Durchführung eines aeroben Belebtschlammverfahrens, einer Vorrichtung zur Durchführung eines anaeroben Phosphoreliminationsverfahrens, einer Vorrichtung zur Durchführung eines Denitrifikationsverfahrens sein, oder einer Vorrichtung zur Durchführung einer biologischen Behandlung im trägerfixierten Wirbelbett sein.

Die Vorrichtung zur mechanischen Reinigung der Abwasserbehandlungsanlage kann eine oder mehrere einzelne Apparate zur mechanischen Reinigung umfassen, nämlich eine oder mehrere Siebtrommeln oder Siebbänder. Diese können beispielsweise parallel oder in Reihe geschaltet sein. Die Anzahl der Apparate zur mechanischen Reinigung und ihre Schaltung kann je nach Art und Menge der zu entfernenden Inhaltsstoffe des Abwassers sowie anfallender Menge des Abwassers gewählt werden.

Die Vorrichtung zur mechanischen Reinigung ist zumindest teilweise über der Grundrissfläche des Reaktionsgefäßes zur biologischen Reinigung angeordnet. Unter der Grundrissfläche des Reaktionsgefäßes ist die senkrechte Projektion des Reaktionsgefäßes auf eine horizontale Fläche zu verstehen. Für die Vorrichtung zur mechanischen Reinigung muss bei dieser Anordnung nur eine Fläche verbaut werden, die kleiner ist als ihre Grundrissfläche, da die Vorrichtung zur mechanischen Reinigung zumindest teilweise innerhalb der ohnehin bereits durch das Reaktionsgefäß zur biologischen Reinigung verbauten Fläche angeordnet ist.

Je größer der über der Grundrissfläche des Reaktionsgefäßes angeordnete Teil der Vorrichtung zur mechanischen Reinigung ist, desto größer die Flächenersparnis.

Die Zufuhreinrichtung für Abwasser zum Reaktionsgefäß zur biologischen Reinigung kann beispielsweise als Rohrleitung, Rinne oder Kanal ausgeführt sein. Da die Zufuhreinrichtung in die Vorrichtung zur mechanischen Reinigung mündet, erreicht beim Betrieb der Abwasserbehandlungsanlage Abwasser das Reaktionsgefäß zur biologischen Reinigung erst nach Passieren der Vorrichtung zur mechanischen Reinigung und Durchtritt durch die Sieböffnungen in ihren Begrenzungsflächen. Entsprechend tritt in das Reaktionsgefäß zur biologischen Reinigung nur Abwasser ein, das beim Passieren des Apparates zur mechanischen Reinigung und/oder dem Durchtritt durch die Sieböffnungen mechanisch gereinigt wurde. Dadurch muss die biologische Reinigung weniger organische Verunreinigungen, die biologischen Sauerstoffbedarf, definiert als BSB5, oder chemischen Sauerstoffbedarf (CSB) verursachen, abbauen, was im Vergleich zu Reaktionsgefäßen ohne integrierte Vorrichtung zur mechanischen Reinigung kleinere Auslegung und geringeren Flächen- und Raumbedarf des Reaktionsgefäßes zur biologischen Reinigung erlaubt.

Die Vorrichtung zur mechanischen Reinigung kann auch vollständig über der Grundrissfläche des Reaktionsgefäßes zur biologischen Reinigung angeordnet sein. Nach einer Ausführungsform befindet sich die Vorrichtung zur mechanischen Reinigung zumindest teilweise innerhalb des Raumes, der von den Wänden des Reaktionsgefäßes zur biologischen Reinigung begrenzt wird.

Nach einer weiteren Ausführungsform befindet sich die Vorrichtung zur mechanischen Reinigung zumindest teilweise unterhalb der Betriebs-Füllhöhe des Reaktionsgefäßes zur biologischen Reinigung. Die Betriebs-Füllhöhe ist ein anlagentechnischer Parameter, der angibt, bis zu welcher Höhe das Reaktionsgefäß zur biologischen Reinigung beim Betrieb befüllt sein muss, um optimale Reinigung mit maximaler Effizienz zu gewährleisten.

Die Vorrichtung zur mechanischen Reinigung ist eine Feinsieb-Vorrichtung. Unter einem Feinsieb ist ein Sieb mit einer lichten Weite der Sieböffnungen von 5 mm und darunter zu verstehen. Durch Feinsiebung wird eine weitgehende Entfernung von ungelösten Inhaltsstoffen des Abwassers erreicht und der Gehalt an Schwebstoffen drastisch vermindert.

Je nach Art und Menge der zu entfernenden Inhaltsstoffe des Abwassers kann die lichte Weite der Sieböffnungen verschieden gewählt werden, wobei die Untergrenze bei 0,005 mm liegt.

Erfindungsgemäß beträgt die lichte Weite der Sieböffnungen mindestens 0,1 mm, bevorzugt mindestens 0,25 mm, und höchstens 1 mm, bevorzugt höchstens 0,5 mm.

Mit solch geringen lichten Weiten wird eine besonders weitgehende Reinigung des Abwassers erreicht und sogar Fett weitgehend abgesiebt, während gleichzeitig die Filtrationsleistung, gemessen in gefiltertem Volumen Abwasser/Zeiteinheit, akzeptabel ist.

Die Feinsieb-Vorrichtung umfasst eine oder mehrere Siebtrommeln oder Siebbänder. Beim Vorhandensein mehrerer Siebtrommeln oder Siebbänder ist es möglich, je nach anfallender Abwassermenge und Abwasserbelastung einer einzelnen Siebtrommel oder eines einzelnen Siebbandes das Abwasser zu einzelnen, mehreren oder allen Siebtrommeln beziehungsweise Siebbändern zuzuführen.

Die erfindungsgemäße Abwasserbehandlungsanlage umfasst auch eine Ausfuhreinrichtung zur Ausfuhr von im Reaktionsgefäß zur biologischen Reinigung behandelten Abwasser aus dem Reaktionsgefäß, die beispielsweise eine Rinne, ein Kanal oder ein Rohr sein kann.

Die Vorrichtung zur mechanischen Reinigung umfasst eine Vorrichtung zum Austrag von aus ungelösten Inhaltsstoffen des Abwassers bestehendem abgeschiedenem Siebgut. Dieses Siebgut kann auf verschiedene Weise ausgetragen werden, beispielsweise mit einer Förderschnecke in einem perforierten Fördertrog. Bevorzugterweise wird das Siebgut beim Austrag entwässert, wobei der Feststoffanteil des Siebgutes erhöht wird, beispielsweise bis auf 35 Gew.% bei kommunalem Abwasser.

Ein weiterer Gegenstand der vorliegenden Erfindung ist eine Kläranlage, die dadurch gekennzeichnet ist, dass sie eine oder mehrere Abwasserbehandlungsanlagen nach einem der Ansprüche 1-4 sowie dieser oder diesen vor- oder nachgeschaltet eine oder mehrere Vorrichtungen zur mechanischen, biologischen oder chemischen Abwasserbehandlung umfasst.

Die erfindungsgemäßen Abwasserbehandlungsanlagen können beim Neubau von Kläranlagen installiert werden. Je nach Art und Menge der zu entfernenden Inhaltsstoffe des Abwassers umfasst eine Kläranlage verschiedene Kombinationen von Vorrichtungen zur mechanischen, biologischen und/oder chemischen Abwasserbehandlung, die entsprechen den auftretenden Reinigungsaufgaben zusammengestellt werden. In einer erfindungsgemäßen Kläranlage können demnach der erfindungsgemäßen Abwasserbehandlungsanlage eine oder mehrere Vorrichtungen zur mechanischen, biologischen oder chemischen Abwasserbehandlung vor- oder nachgeschaltet sein. Vorgeschaltet sind beispielsweise Vorrichtungen zur mechanischen Reinigung wie etwa Rechen und Sandfänge. Nachgeschaltet sind beispielsweise Vorrichtungen zur biologischen Reinigung wie etwa Vorrichtungen zur Durchführung von unbelüftete Stufen oder belüfteten Stufen eines Belebtschlammverfahrens, wie beispielsweise eines aeroben Belebtschlammverfahrens, Vorrichtungen zur Durchführung eines anaeroben Phosphoreliminationsverfahrens, Vorrichtungen zur Durchführung eines Denitrifikationsverfahrens oder Vorrichtungen zur Durchführung einer biologischen Behandlung im trägerfixierten Wirbelbett.

Der Flächen- und Raumbedarf einer Kläranlage, welche erfindungsgemäße Abwasserbehandlungsanlagen umfasst, ist geringer als der einer konventionellen Kläranlage zur Erfüllung der gleichen Reinigungsaufgabe mit gleicher Abbauleistung. In einer erfindungsgemäßen Kläranlage kann in den meisten Fällen auf flächenaufwändige Vorklärbecken zum Absetzen oder zur Flotation von Schwebstoffen verzichtet werden, da Schwebstoffe durch Feinsiebung in der erfindungsgemäßen Abwasserbehandlungsanlage entfernt werden. Das bringt einen gegenüber herkömmlichen Kläranlagen erheblich verminderten Flächenbedarf der Kläranlage mit sich.

Auf die Errichtung belüfteter Sand/Fettfänge zur Abtrennung von Sand und Fett kann verzichtet werden, wenn auch Fett in der erfindungsgemäßen Abwasserbehandlungsanlage weitgehend abgesiebt wird. Stattdessen ist in einer erfindungsgemäßen Kläranlage die Errichtung von unbelüfteten Sandfängen ausreichend, die bau- und apparatetechnisch einfacher und platz- und raumsparender gestaltet werden können, denn die Größe belüfteter Sand/Fettfänge wird durch die verfahrenstechnische Aufgabe der Fettabscheidung bestimmt.

Zusätzliche Flächeneinsparungen können sich ergeben, wenn Siebgut beim Austrag aus der Vorrichtung zur mechanischen Reinigung entwässert wird. Ausgetragenes Siebgut kann wie Primärschlamm aus Vorklärbecken eingestuft werden. Weitgehende Entwässerung des abgeschiedenen Siebgutes beim Austrag und Steigerung des Eliminationsgrades von Abwasserinhaltsstoffen beeinflussen den Flächen- und Raumbedarf einer Kläranlage, da anaerobe oder aeroben Schlammstabilisierungsanlagen und/oder sonstige Entsorgungs- und Entwässerungseinrichtungen kleiner bemessen werden können.

Erfindungsgemäße Abwasserbehandlungsanlagen können auch bei der Erweiterung bestehender Abwasserbehandlungsanlagen eingesetzt und in bestehende Kläranlagen eingebaut werden, um verbesserte Reinigungsleistungen bei gleichbleibendem Flächenbedarf zu ermöglichen beziehungsweise Engpässe der bestehenden Kläranlage zu beseitigen.

Wenn in einer erfindungsgemäßen Kläranlage zusätzlich zu erfindungsgemäßen Abwasserbehandlungsanlagen auch in weiteren Vorrichtungen biologische Abwasserbehandlung stattfindet, ist es vorteilhafterweise so, dass die erfindungsgemäßen Abwasserbehandlungsanlagen in Fließrichtung des Abwassers gesehen vor den weiteren Vorrichtungen zur biologischen Abwasserbehandlung angeordnet sind. Dadurch wird erreicht, dass nur bereits in einer erfindungsgemäßen Abwasserbehandlungsanlage behandeltes Abwasser in die weiteren Vorrichtungen zur biologischen Abwasserbehandlung eingeleitet wird. Dieses behandelte Abwasser führt wenig biologisch abzubauendes Material mit sich, und entsprechend können die weiteren Vorrichtungen zur biologischen Abwasserbehandlung klein dimensioniert werden, was den Flächen und Raumbedarf der Kläranlage senkt.

Das erfindungsgemäße Verfahren zum Behandeln von Abwasser ist in Anspruch 6 wiedergegeben.

Bevorzugt erfolgt die biologische Reinigung mittels eines aeroben Belebtschlammverfahrens, eines anaeroben Phosphoreliminationsverfahrens, eines Denitrifikationsverfahrens, oder einer biologischen Behandlung im trägerfixierten Wirbelbett.

Die Erfindung wird anhand der angeschlossenen beispielhaften und schematischen Figuren 1, 2, 3, 4a und 4b sowie der folgenden Beschreibungen erläutert.
Fig. 1 zeigt ein Schema einer Kläranlage nach dem Stand der Technik.
Fig. 2 zeigt ein Schema einer Ausführungsform einer erfindungsgemäßen Kläranlage mit einer erfindungsgemäßen Abwasserbehandlungsanlage, die eine in ein aerobes Belebungsbecken integrierte Vorrichtung zur mechanischen Reinigung umfasst.
Fig. 3 zeigt schematisch die Anordnung eines Siebbandes in einem Becken für einen aeroben biologischen Belebtschlamm-Prozess.
Fig. 4a und Fig. 4b zeigen schematisch eine Frontalansicht und eine Seitenansicht der erfindungsgemäßen Anordnung einer Siebtrommel in einem Belebtschlammbecken.

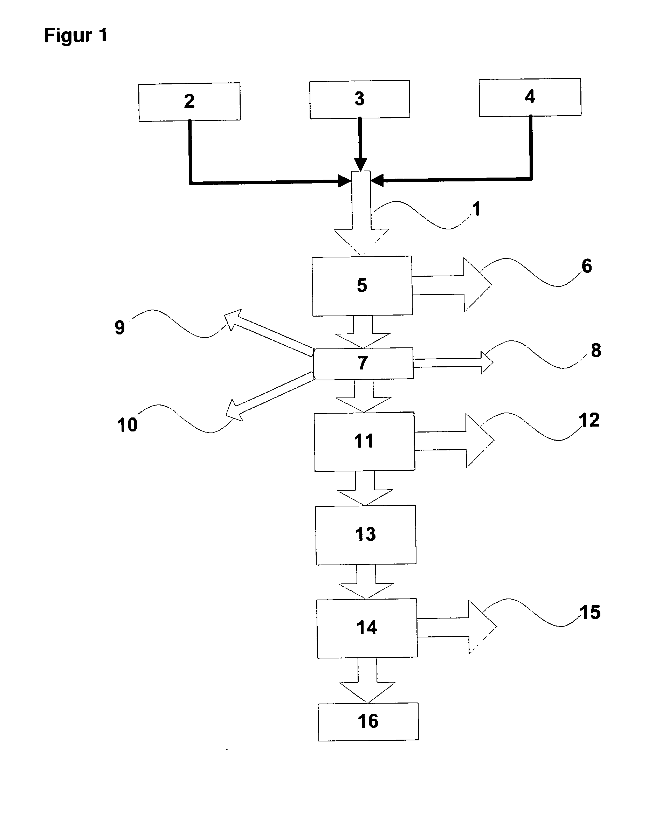

In Fig. 1 ist gezeigt, wie Abwasser 1 unterschiedlicher Herkunft, beispielsweise häusliches Abwasser 2, Niederschlagswasser aus dem Bereich von Ansiedlungen 3, oder gewerbliches beziehungsweise industrielles Abwasser 4, in einer Kläranlage nach dem Stand der Technik zuerst mechanisch und dann biologisch behandelt wird. Die Vorrichtungen, in denen die einzelnen mechanischen und biologischen Reinigungsschritte durchgeführt werden, sind nebeneinander, räumlich getrennt voneinander angeordnet und werden vom Abwasser 1 nacheinander durchströmt. Zuerst werden mittels Rechen 5 Sperrstoffe 6 entfernt. Danach werden in einem belüfteten Sand/Fettfang 7 Sand 8 und Fette 9 und Öle 10 abgeschieden. Anschließend werden im Absetzbecken 11 Schwebstoffe abgeschieden und als Primärschlamm 12 entnommen. Dann wird das derart mechanisch behandelte Abwasser einem aeroben Belebungsbecken 13 zugeführt. Auf das aerobe Belebungsbecken 13 folgt ein Nachklärbecken 14, aus dem Übersschussschlamm 15 entnommen wird. Aus dem Nachklärbecken 14 wird das gereinigte Abwasser in den Vorfluter 16 entlassen.

Vorrichtungen zur Behandlung des anfallenden Primär- und Überschussschlammes sind nicht gezeigt.

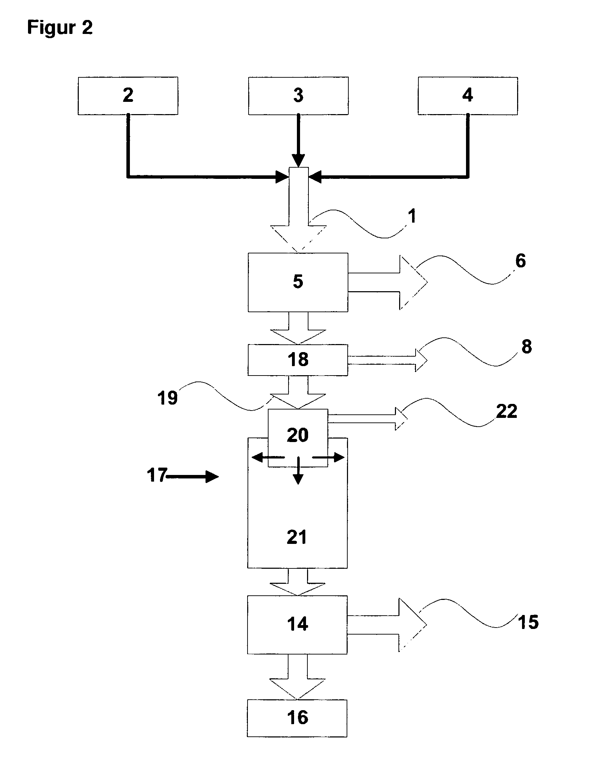

Die in Fig. 2 dargestellte erfindungsgemäße Kläranlage unterscheidet sich von der Kläranlage in Fig. 1 dadurch, dass das aerobe Belebungsbecken 13 durch eine erfindungsgemäße Abwasserbehandlungsanlage 17 ersetzt wurde, der belüftete Sand/Fettfang 7 durch einen unbelüfteten Sandfang 18 ersetzt wurde, und auf das Absetzbecken 11 verzichtet wurde, was den Flächenbedarf der Kläranlage gegenüber der in Fig. 1 dargestellten Kläranlage deutlich reduziert. Nach Passieren des unbelüfteten Sandfanges 18, wird das mittels Rechen 5 und unbelüfteten Sandfang 18 mechanisch behandelte Abwasser durch eine Rohrleitung 19 in die Vorrichtung zur mechanischen Reinigung 20 der erfindungsgemäßen Abwasserbehandlungsanlage 17 geleitet, welche innerhalb eines aeroben Belebungsbeckens 21 angeordnet ist. Aus der Vorrichtung zur mechanischen Reinigung 20 tritt das Abwasser durch Sieböffnungen in ihren Begrenzungsflächen in das aerobe Belebungsbecken über, was durch Pfeile angedeutet ist. Aus der Vorrichtung zur mechanischen Reinigung 20 wird abgeschiedenes Siebgut 22, das Schwebstoffe, Fette und Öle enthält, ausgetragen. Auf die erfindungsgemäße Abwasserbehandlungsanlage 17 folgt ein Nachklärbecken 14, aus dem Übersschussschlamm 15 entnommen wird. Aus dem Nachklärbecken 14 wird das gereinigte Abwasser in den Vorfluter 16 entlassen.

Vorrichtungen zur Behandlung des anfallenden Siebgutes und Überschussschlammes sind nicht gezeigt.

In den Fig. 1 und 2 geben die Pfeile die Bewegungsrichtung des Abwassers beziehungsweise der aus den verschiedenen Vorrichtungen ausgetragenen Stoffe wie Sperrstoffe, Sand, Fett, Öle, Primärschlamm, Überschussschlamm und Siebgut an.

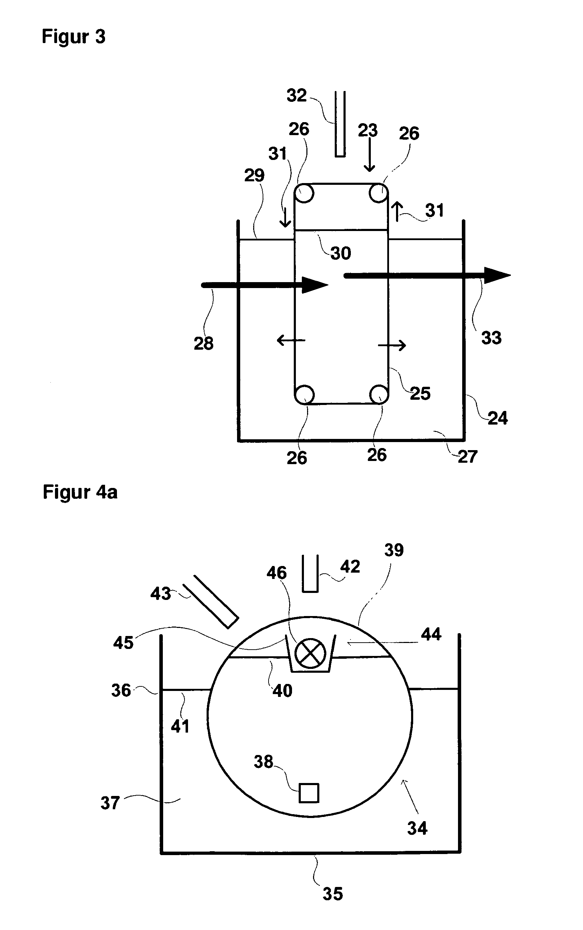

Fig. 3 zeigt schematisch die Anordnung einer Feinsieb-Vorrichtung 23 in einem Becken 24 für einen aeroben biologischen Belebtschlamm-Prozess als Schnitt. Die Feinsieb-Vorrichtung 23 umfasst ein geschlossenes Siebband 25, das um Umlenkrollen 26 geführt ist. Das Siebband 25 taucht teilweise in die im Becken 24 enthaltene Belebtschlamm-Suspension 27 ein. Der vom Siebband 25 umschlossene Raum ist an seinen Stirnseiten abgedichtet, so dass das Abwasser nur durch die Sieböffnungen des Siebbandes 25 in das Becken 24 strömen kann. Der vom Siebband 25 umschlossene Raum wird als Innenraum des Siebbandes bezeichnet. Die dem Innenraum zugewandte Fläche des Siebbandes 25 wird als Innenfläche des Siebbandes bezeichnet, während die andere Fläche des Siebbandes 25 als Außenfläche des Siebbandes bezeichnet wird. Zur übersichtlicheren Darstellung sind die Sieböffnungen des Siebbandes 25 nicht dargestellt. Durch eine Zulaufleitung 28, die durch eine der Stirnseiten geführt ist, strömt Abwasser in den Innenraum des Siebbandes. Bis auf die Durchtrittsöffnung der Zulaufleitung 28 haben die Stirnseiten keine Öffnungen. Das Abwasser fließt aus dem Innenraum des Siebbandes durch die Sieböffnungen des Siebbandes 25 in das Becken 24, angedeutet durch Pfeile. Bei Verlegung von Sieböffnungen durch abgeschiedenes Siebgut staut sich Abwasser im Innenraum des Siebbandes, und aufgrund des dann über dem Spiegel der Belebtschlamm-Suspension 29 liegenden Spiegel des Abwassers 30 im Innenraum des Siebbandes baut sich ein Staudruck auf. Die Größe des Staudrucks wird als Maß für die Verlegung der Sieböffnungen des Siebbandes verwendet. Überschreitet der Staudruck einen gewählten Grenzwert, wird das Siebband 25 durch nicht dargestellte Vorrichtungen so bewegt, dass bisher in die Belebtschlamm-Suspension 27 eintauchende, durch abgeschiedenes Siebgut verlegte Teile des Siebbandes 25 über den Spiegel der Belebtschlamm-Suspension 29 im Becken gelangen. Gleichzeitig tauchen bisher über dem Spiegel der Belebtschlamm-Suspension 29 liegende, nicht durch abgeschiedenes Siebgut verlegte Teile des Siebbandes 25 in die Belebtschlamm-Suspension 27 ein. Die Bewegungsrichtung des Siebbandes 25 wird durch Pfeile 31 angezeigt. Der durch die Bewegung des Siebbandes über die dem Spiegel der Belebtschlamm-Suspension 29 gelangte Teil des Siebbandes 25 wird mittels einer Reinigungseinrichtung 32 mit einem auf die Außenfläche des Siebbandes gerichteten Strahl von Wasser und/oder Luft gereinigt. Dabei fällt abgeschiedenes Siebgut in den Innenraum des Siebbandes und wird aus diesem über eine nicht dargestellte Vorrichtung zum Austrag von Siebgut ausgetragen. Durch eine Ausfuhrleitung 33 wird das im Becken 24 biologisch behandelte Abwasser aus dem Becken 24 ausgeführt.

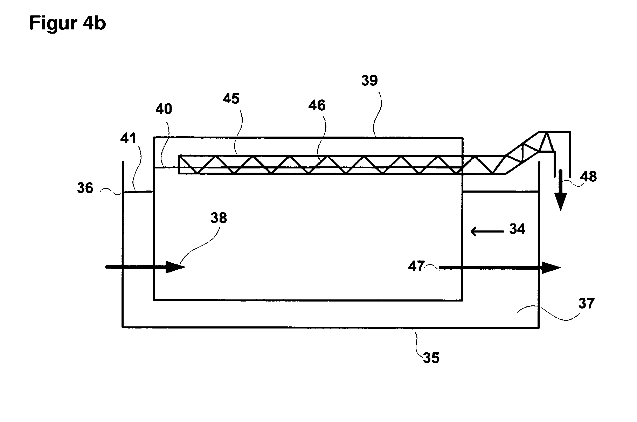

In Fig. 4a und Fig. 4b ist gezeigt, wie eine zylindrische Siebtrommel 34 innerhalb eines Belebtschlammbeckens 35 angeordnet ist. Das Belebtschlammbecken 35 ist bis zur Betriebs-Füllhöhe 36 mit Belebtschlamm-Suspension 37 gefüllt. Die Siebtrommel 34 befindet sich innerhalb des Belebtschlammbeckens 35 und taucht teilweise in die Belebtschlamm-Suspension 37 ein. Das Abwasser wird durch eine Zulaufleitung 38, die durch eine der beiden Deckflächen ins Innere der Siebtrommel 34 führt, eingeleitet. Bis auf die Durchtrittsöffnung der Zulaufleitung 38 haben die Deckflächen keine Öffnungen. Die Mantelfläche 39 der zylinderförmigen Siebtrommel 34 ist teilweise als Feinsieb ausgebildet. Das Abwasser durchströmt das Feinsieb beim Durchtritt aus dem Inneren der Siebtrommel 34 in das Belebtschlammbecken 35. Hierzu ist ein Staudruck erforderlich, der sich im Innern der Siebtrommel aufbaut, wenn der Spiegel des Abwassers 40 im Inneren der Siebtrommel 34 höher liegt als der Spiegel der Belebtschlamm-Suspension 41 im Belebtschlammbecken 35. Diese Höhendifferenz wird Staudifferenz genannt. Die Staudifferenz ist je nach eingeleiteter Abwassermenge pro Zeiteinheit und Ausmaß der Verlegung des Feinsiebes unterschiedlich hoch. Die mögliche Staudifferenz wird durch die örtliche Einbausituation vorgegeben; beträgt jedoch idealer Weise nicht mehr als 50 cm. Die Strömungen innerhalb des mit Belebtschlamm-Suspension 37 gefüllten Belebtschlammbeckens 35 beeinflussen die Feinsiebung nicht, da durch den sich aufbauenden Staudruck die Strömungsrichtung des Abwassers eindeutig vorgegeben ist. Die maximale geplante Staudifferenz wird durch eine nicht dargestellte Füllstandsmessung innerhalb der Siebtrommel 34 erfasst. Beim Überschreiten eines eingestellten Grenzwertes für den Füllstand wird automatisch eine Rotationsbewegung der Siebtrommel 34 um ihre Längsachse sowie die Abreinigung des Bereiches des Feinsiebes ausgelöst, der sich über dem Spiegel der Belebtschlamm-Suspension 41 befindet. Vorrichtungen zur Bewegung der Siebtrommel sind nicht dargestellt. Die Abreinigung erfolgt bei rotierender Trommel mittels einer Reinigungseinrichtung 42 mit einem Luftstrahl und mittels einer Reinigungseinrichtung 43 mit einem Wasserstrahl. Das am Feinsieb abgeschiedene Siebgut wird dabei durch den Luftstrahl abgeblasen und fällt in eine Vorrichtung zum Austrag 44, die unterhalb der Reinigungseinrichtung 42 installiert ist. Die Vorrichtung zum Austrag 44 umfasst eine perforierte Aufnahmerinne 45 für das beim Abreinigen herabfallende Siebgut sowie eine Förderschnecke 46. Die Förderschnecke 46 transportiert das Siebgut aus der Aufnahmerinne 45 ab und entwässert es dabei.

Bei der in Fig. 4a und Fig. 4b dargestellten Ausführungsform ist es von Vorteil, dass das Siebgut nach dem Abreinigen des Feinsiebes nicht im Abwasser supendiert wird, bevor es aus der Siebtrommel 34 ausgetragen wird. Dadurch kann beim Austrag gründlicher entwässert werden.

Bereiche der Siebtrommel 34, die durch den Luftstrahl der Reinigungseinrichtung 42 gereinigt wurden, bewegen sich durch die Rotation der Siebtrommel von der Reinigungseinrichtung 42 weg und werden schließlich vom Wasserstrahl der Reinigungseinrichtung 43 getroffen und gereinigt. Da die Reinigungseinrichtung 43 seitlich versetzt zur Reinigungseinrichtung 42 angeordnet ist, dringt das Abspritzwasser nicht in die Aufnahmerinne 45 ein. Das Abspritzwasser wird nicht gesondert gesammelt sondern vermischt sich mit dem Abwasser im Inneren der Siebtrommel 34.

Durch eine Ausfuhrleitung 47 wird das im Belebtschlammbecken 35 biologisch behandelte Abwasser aus dem Belebtschlammbecken 35 ausgeführt. Das beim Austrag entwässerte Siebgut wird der Vorrichtung zum Austrag 44 als Filterkuchen 48 entnommen.

## Patentansprüche

1. Abwasserbehandlungsanlage (17), umfassend zumindest ein Reaktionsgefäß zur biologischen Reinigung mit einer zumindest teilweise über dessen Grundrissfläche angeordneten Vorrichtung zur mechanischen Reinigung (20), und mit einer in die Vorrichtung zur mechanischen Reinigung (20) mündenden Zufuhreinrichtung für Abwasser, wobei das Reaktionsgefäß zur Durchführung von unbelüfteten oder belüfteten Stufen eines Belebtschlammverfahrens, zur Durchführung eines aeroben Belebtschlammverfahrens, eines anaeroben Phosphoreliminationsverfahrens, eines Denitrifikationsverfahrens, oder einer biologischen Behandlung im trägerfixierten Wirbelbett ausgebildet ist, und wobei die Vorrichtung zur mechanischen Reinigung (20) eine Feinsieb-Vorrichtung (23) ist, die eine oder mehrere Siebtrommeln (34) oder ein oder mehrere Siebbänder (25) umfasst, und in zumindest einer ihrer Begrenzungsflächen Sieböffnungen aufweist, wobei die lichte Weite der Sieböffnungen der Feinsieb-Vorrichtung (23) mindestens 0,1 mm, bevorzugt mindestens 0,25 mm, und höchstens 1 mm, bevorzugt höchstens 0,5 mm beträgt.

2. Abwasserbehandlungsanlage nach Anspruch 1, **dadurch gekennzeichnet, dass** die Vorrichtung zur mechanischen Reinigung (20) vollständig über der Grundrissfläche des Reaktionsgefäßes zur biologischen Reinigung angeordnet ist.

3. Abwasserbehandlungsanlage nach Anspruch 1 oder 2, **dadurch gekennzeichnet, dass** sich die Vorrichtung zur mechanischen Reinigung (20) zumindest teilweise innerhalb des Raumes, der von den Wänden des Reaktionsgefäßes zur biologischen Reinigung begrenzt wird, befindet.

4. Abwasserbehandlungsanlage nach einem der Ansprüche 1-3, **dadurch gekennzeichnet, dass** sich die Vorrichtung zur mechanischen Reinigung (20) zumindest teilweise unterhalb der Betriebs-Füllhöhe des Reaktionsgefäßes zur biologischen Reinigung befindet.

5. Kläranlage, **dadurch gekennzeichnet, dass** sie eine oder mehrere Abwasserbehandlungsanlagen (17) nach einem der Ansprüche 1-4 sowie dieser oder diesen vor- oder nachgeschaltet eine oder mehrere Vorrichtungen zur mechanischen, biologischen oder chemischen Abwasserbehandlung umfasst.

6. Verfahren zum Behandeln von Abwasser, **dadurch gekennzeichnet, dass** das Abwasser mittels einer Vorrichtung zur Feinsiebung, die sich zumindest teilweise über der Grundrissfläche eines Reaktionsgefäßes zur biologischen Reinigung befindet, mechanisch gereinigt wird, und aus dieser in das Reaktionsgefäß zur biologischen Reinigung übertritt und dort mittels unbelüfteter oder belüfteter Stufen eines Belebtschlammverfahrens, mittels eines aeroben Belebtschlammverfahrens, eines anaeroben Phosphoreliminationsverfahrens, eines Denitrifikationsverfahrens, oder einer biologischen Behandlung im trägerfixierten Wirbelbett biologisch gereinigt wird, wobei die Feinsiebung mittels einer oder mehrerer Siebtrommeln (34) oder mittels eines oder mehrerer Siebbänder (25) durchgeführt wird und die lichte Weite der Sieböffnungen bei der Feinsiebung mindestens 0,1 mm, bevorzugt mindestens 0,25 mm, und höchstens 1 mm, bevorzugt höchstens 0,5 mm beträgt.

## Claims

1. A wastewater treatment installation (17), comprising at least one biological purification reaction vessel with a mechanical purification apparatus (20) arranged at least in part over the ground plan area thereof and with a wastewater feed means leading into the mechanical purification apparatus (20), whereas the reaction vessel is designed for performing non-aerated or aerated steps of an activated-sludge method, for performing an aerobic activated-sludge method, an anaerobic phosphorus elimination method, a denitrification method, or a biological treatment in a support-immobilized fluidized bed, and whereas the mechanical purification apparatus (20) is a fine screen apparatus (23), and whereas the fine screen apparatus (23) comprises one or more screening drums (34) or one or more belt screens (25), and the mechanical purification apparatus (20) comprising screen openings in at least one of its boundary surfaces, and whereas the clear width of the screen openings of the fine screen apparatus (23) amounts to at least 0.1 mm, preferably at least 0.25 mm, and at most 1 mm, preferably at most 0.5 mm.

2. The wastewater treatment installation as claimed in claim 1, **characterized in that** the mechanical purification apparatus (20) is arranged wholly over the ground plan area of the biological purification reaction vessel.

3. The wastewater treatment installation as claimed in claim 1 or 2, **characterized in that** the mechanical purification apparatus (20) is located at least in part within the space defined by the walls of the biological purification reaction vessel.

4. The wastewater treatment installation as claimed in one of claims 1-3, **characterized in that** the mechanical purification apparatus (20) is located at least in part below the operational filling level of the biological purification reaction vessel.

5. An effluent treatment plant, **characterized in that** it comprises one or more wastewater treatment installations (17) as claimed in one of claims 1-4 together with one or more apparatuses for mechanical, biological or chemical wastewater treatment arranged up- or downstream thereof.

6. A method for treating wastewater, **characterized in that** the wastewater is purified mechanically by means of a fine screen apparatus, which is located at least in part over the ground plan area of a biological purification reaction vessel, and passes therefrom into the biological purification reaction vessel and is there purified biologically by non-aerated or aerated steps of an activated-sludge method, an aerobic activated-sludge method, by an anaerobic phosphorus elimination method, by a denitrification method, or by a biological treatment in a support-immobilized fluidized bed, whereas fine screening is performed by one or more screening drums (34) or one or more belt screens (25), and whereas the clear width of the screen openings for fine screening amounts to at least 0.1 mm, preferably at least 0.25 mm, and at most 1 mm, preferably at most 0.5 mm.

## Revendications

1. Installation de traitement des eaux usées (17), comprenant au moins une cuve de réaction pour l'épuration biologique avec un dispositif d'épuration mécanique (20) disposé au moins partiellement au-dessus de son aire en plan et avec un dispositif d'amenée d'eaux usées débouchant dans le dispositif d'épuration mécanique (20), dans laquelle la cuve de réaction est conçue pour l'exécution d'étapes non aérées ou aérées d'un procédé à la boue activée, pour l'exécution d'un procédé à la boue activée aérobie, d'un procédé d'élimination du phosphore anaérobie, d'un procédé de dénitrification ou d'un traitement biologique en lit fluidisé fixé au support, et dans laquelle le dispositif d'épuration mécanique (20) est un dispositif de criblage fin (23) qui comprend un ou plusieurs tambours filtrants (34) ou une ou plusieurs bandes filtrantes (25), et présente des ouvertures de criblage dans au moins une de ses surfaces de délimitation, la largeur libre des ouvertures de criblage du dispositif de criblage fin (23) étant au minimum de 0,1 mm, de préférence au minimum de 0,25 mm, et au maximum de 1 mm, de préférence au maximum de 0,5 mm.

2. Installation de traitement des eaux usées selon la revendication 1, **caractérisée en ce que** le dispositif d'épuration mécanique (20) est entièrement disposé au-dessus de l'aire en plan de la cuve de réaction pour l'épuration biologique.

3. Installation de traitement des eaux usées selon la revendication 1 ou 2, **caractérisée en ce que** le dispositif d'épuration mécanique (20) se trouve au moins partiellement à l'intérieur de l'espace délimité par les parois de la cuve de réaction pour l'épuration biologique.

4. Installation de traitement des eaux usées selon l'une des revendications 1 à 3, **caractérisée en ce que** le dispositif d'épuration mécanique (20) se trouve au moins partiellement en dessous de la hauteur de remplissage en service de la cuve de réaction pour l'épuration biologique.

5. Station d'épuration, **caractérisée en ce qu'**elle comprend une ou plusieurs installations de traitement des eaux usées (17) selon l'une des revendications 1 à 4 et un ou plusieurs dispositifs pour le traitement mécanique, biologique ou chimique des eaux usées montés avant ou après celles-ci.

6. Procédé pour le traitement des eaux usées, **caractérisé en ce que** les eaux usées sont épurées mécaniquement au moyen d'un dispositif de criblage fin qui se trouve au moins partiellement au-dessus de l'aire en plan d'une cuve de réaction pour l'épuration biologique et passent de celui-ci à la cuve de réaction pour l'épuration biologique où elles sont épurées biologiquement au moyen d'étapes non aérées ou aérées d'un procédé à la boue activée, au moyen d'un procédé à la boue activée aérobie, d'un procédé d'élimination du phosphore anaérobie, d'un procédé de dénitrification ou d'un traitement biologique en lit fluidisé fixé au support, le criblage fin étant réalisé au moyen d'un ou plusieurs tambours filtrants (34) ou d'une ou plusieurs bandes filtrantes (25) et la largeur libre des ouvertures de criblage pour le criblage fin étant au minimum de 0,1 mm, de préférence au minimum de 0,25, mm et au maximum de 1 mm, de préférence au maximum de 0,5 mm.
